# EUROPEAN PATENT APPLICATION

(11) **EP 2 106 036 A1**
(43) Date of publication of application: **30.09.2009**
(21) Application number: 08290274.3
(22) Date of filing: 25.03.2008
(51) Int. Cl.: H04B 7/02, H04B 7/04

(54) **Data synchronization in collaborative MIMO and method thereof**

(71) Applicant: Alcatel Lucent, 75008 Paris (FR)
(72) Inventor: Fahldieck, Torsten, 71254 Ditzingen (DE)
(74) Representative: Richardt, Markus Albert

(57) **Abstract**

The present invention provides a method, a base station and a computer program product for data synchronisation of collaborative MIMO in an OFDMA system, the OFDMA system comprising a network element coupled to at least a first and a second base station, the first and second base station coupled to at least a wireless terminal, the method comprising the steps of: receiving a collaborative MIMO connection request from the wireless terminal by the first or second base station; sending a duplication request signal to the network element from the first base station, the duplication signal indicating a duplication of a collaborative IP flow for the wireless terminal; receiving a first IP packet of the collaborative IP flow from the core network by the network element. The method further comprises the steps of copying the first IP packet and sending it to at least the first and second base station; receiving the first IP packet by the first base station and scheduling a first portion of a first downlink frame; sending a frame layout message from the first base station to the second base station, the frame layout message containing a description about the first portion of the first downlink frame; scheduling a second portion of a second downlink frame by the second base station with the description of the first portion of the first downlink frame, wherein the first and second portion of the first and second downlink frames are identical.

## Description

### Technical field

The invention relates to a method of data synchronization in a base station, and more particularly to a data synchronization in an OFDMA system and to a computer program product.

### Background and related art

In radio technologies, multiple input and multiple output or MIMO defines the use of multiple antennas at the transmitter and receiver in order to improve the communication performance. Further, it increases the data throughput and link range without additional bandwidth or transmit power. One of the main functions of MIMO is the spatial multiplexing that splits a high rate signal into multiple lower rate streams, transmitting each stream from a different transmit antenna in the same frequency channel. A MIMO channel can be modeled as having several transmit streams to go through a matrix channel consisting of multiple paths between multiple transmit antennas at the transmitter and multiple receive antennas at the receiver. The receiver gets the signals by multiple receiver antennas and decodes the received signal vectors into the original information.

A special type of MIMO is the so called collaborative MIMO that allows a group of base stations to transmit to at least a wireless terminal in a same band and time, even if each base station has a single antenna. By sharing the resources between two or more base stations, the sum throughput of the individual transmitters is incremented. Typically for the downlink, or transmission from a base station to a wireless terminal, the group of base stations form a collaborative MIMO domain. There is therefore a need for data synchronization in an OFDMA system with collaborative MIMO capability.

### Summary

The present invention provides a method for data synchronisation of collaborative MIMO in an OFDMA system, the OFDMA system comprising a network element coupled to at least a first and a second base station, the first and second base station coupled to at least a wireless terminal, the method comprising the steps of: receiving a collaborative MIMO connection request from the wireless terminal by the first or second base station; sending a duplication signal to the network element from the first base station, the duplication signal indicating a duplication of a collaborative IP flow for the wireless terminal; receiving a first IP packet of the collaborative IP flow by the network element.

The method further comprises the steps of copying the first IP packet and sending it to at least the first and second base station; receiving the first IP packet by the first base station and scheduling a first portion of a first downlink frame; sending a frame layout message from the first base station to the second base station, the frame layout message containing a description about the first portion of the first downlink frame; scheduling a second portion of a second downlink frame by the second base station with the description of the first portion of the first downlink frame, wherein the first and second portion of the first and second downlink frames are identical. The OFDMA system may comply with one or more of the current standards, as e.g. Wi-MAX, or LTE.

The main advantage of the embodiments is that the efficiency of the MIMO technology is improved by distributing the data flow to a specific wireless terminal over several base stations. The embodiments allow the synchronization of the base stations when using collaborative MIMO in the downlink direction. The wireless terminal receives the radio signals in a similar way as when it is sent from a single base station.

In accordance with an embodiment, the frame layout message further comprises: a first downlink frame number; position, size and coding scheme of every burst of the first downlink frame; and information of one or more MAC PDU of each burst. The frame layout message contains all necessary information allowing the second base station to schedules the portion of the downlink frame corresponding to the CO-MIMO flow.

In accordance with an embodiment, the method further comprises:
configuring the first base station as a master base station and at least the second base station as a slave base station, wherein the master base station is in charge of creating and sending the frame layout message to the slave base stations.

In a further embodiment, the master and slave base station identifies a packet loss by reading an incrementing reference number of a GRE header of a previous IP packet of the first IP packet. The embodiments take advantage of already existing resources allows identifying packets not received by the master or the slave base station.

In a further embodiment, if the master base station does not receive the first IP packet, the master base station does not sent the frame layout message to the slave base stations and the slave base station schedules the second portion of the second frame without the description of the first portion of the first downlink frame.

In accordance with an embodiment, if the slave base station does not receive the first IP packet, the second portion of the second downlink frame contains only padding information.

In another aspect, the invention relates to a base station for an OFDMA system, the base station comprising:
- means for receiving a collaborative MIMO connection request from a wireless terminal (105), said wireless terminal being coupled to a base station and to at least another base station, said base station and at least said another base station of said OFDMA system;
- means for sending a duplication signal to a network element, said duplication signal indicating a duplication of a collaborative IP flow for said wireless terminal, said network element coupled to said base station and to at least said another base station;
- means for receiving a first IP packet of said collaborative IP flow, said first IP packet being copied by said network element;
- means for scheduling a first portion of a first downlink frame;
- means for sending a frame layout message to said second base station, said frame layout message containing a description about said first portion of said first downlink frame, said second base station being adapted for scheduling a second portion of a second downlink frame by said second base station with said description of said first portion of said first downlink frame, wherein said first and second portion of said first and second downlink frames are identical.

In accordance with an embodiment in the base station the frame layout message further comprises: a first downlink frame number; position, size and coding scheme of every burst of the first downlink frame; and information of one or more MAC PDU of each burst.

In accordance with an embodiment the base station further comprises means for scheduling IP packets from non collaborative IP flows on other portions of the first downlink frame.

An OFDMA system for data synchronisation of collaborative MIMO comprising a master base station in accordance with the embodiments and a slave base station, wherein said master base station is in charge of creating and sending a frame layout message to said slave base stations, wherein said master and slave base station are coupled to a network element.

In another aspect, the invention relates to a computer program product stored on a computer usable medium, comprising computer readable program means for causing a computer to perform a method according to any of the preceding embodiments when the program is run on the computer.

### Brief description of the drawings

In the following preferred embodiments of the invention will be described in greater detail by way of example only making reference to the drawings in which:
- Figure 1: shows an example of a wireless communication system,
- Figure 2: shows a second example of a wireless communication system and the downlink frames,
- Figure 3: shows a flowchart of a method according to an embodiment.

### Detailed description

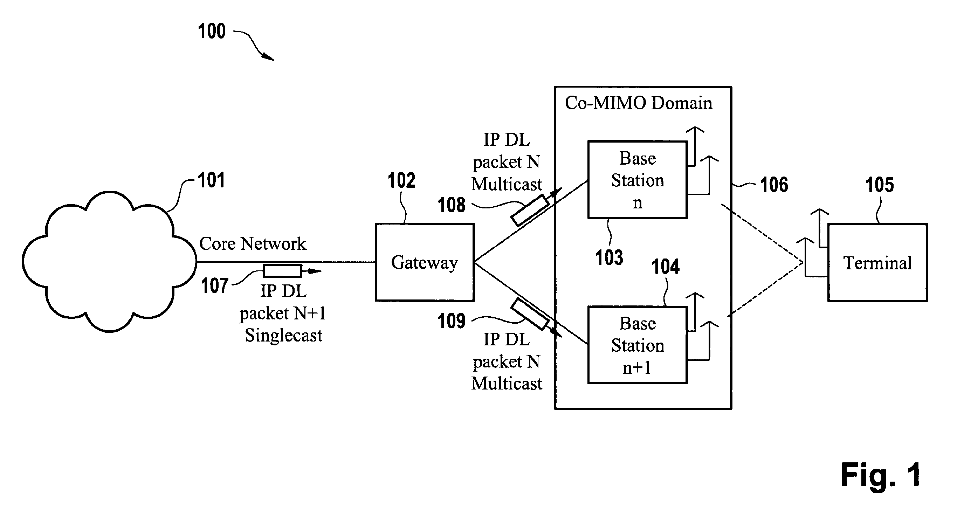

Fig. 1 shows a wireless communication system 100 comprising a core network 101, a network element 102, a first base station 103, a second base station 104 and a wireless terminal 105.

In current wireless communication systems the multiple input/multiple output (MIMO) is often used to increase the throughput by using multiple antennas both at the transmitter and the receiver elements and improving the performance of the radio communication. A typical deployment consists of a group of base stations equipped with two antennas and wireless terminals equipped with two antennas. In the wireless communication system 100, the two base stations 103 and 104 include two base stations, the same as the wireless terminal 105. The data flow in the downlink direction from the base station to the wireless terminal is distributed over the different channels of all the antennas using the MIMO technology. A further possibility to improve the efficiency of the MIMO technology consists of distributing the data flow to a specific wireless terminal over several base stations. This technology is known as collaborative MIMO, where two base stations 103 and 104 are used in the downlink direction to communicate with the wireless terminal. The terminal receives the radio signals simultaneously, or within a small timeframe, from both base stations.

The wireless communication system 100 allows the synchronization of the base stations when using collaborative MIMO in the downlink direction, so that the wireless terminal receives the radio signals in a similar way as when it is sent from a single base station. In order to do so, a collaborative MIMO domain 106 needs to be defined, where both base stations receive and send the same portions of downlink frame corresponding to the collaborative MIMO session. When the wireless terminal 105 detects two or more base stations within its coverage zone, it may send to the base station a collaborative MIMO connection request. This request may also be initiated within one of the base stations that communicates with the wireless terminal 105.

The first base station 103, after processing the collaborative MIMO request, sends a duplication request to the network element 102, that can be for example a gateway, so that all the packets belonging to the IP flow for that connection with the wireless terminal 105 will be duplicated and sent to all the base stations within the collaborative MIMO domain. The IP packet 107 is then duplicated by the network element into the packets 108 and 109 that are received by both base stations. The transmission of the IP packets from the core network to the base station may correspond to a unicast connection between the network element to the base station, or to multicast connections, so that the duplication of the IP packets is done by the closest network element that is connected to both base stations.

In the collaborative MIMO domain 106, one of the base stations is assigned as the master base station. The master base station is in charge of preparing a portion of the downlink frame that corresponds to the collaborative MIMO communication and sending a frame layout message to the slave base station, so that the slave base station can build the portion of the respective downlink frame in an identical way as the master base station. In that way, the wireless terminal takes advantage of the MIMO technology, even by receiving signals from different base stations.

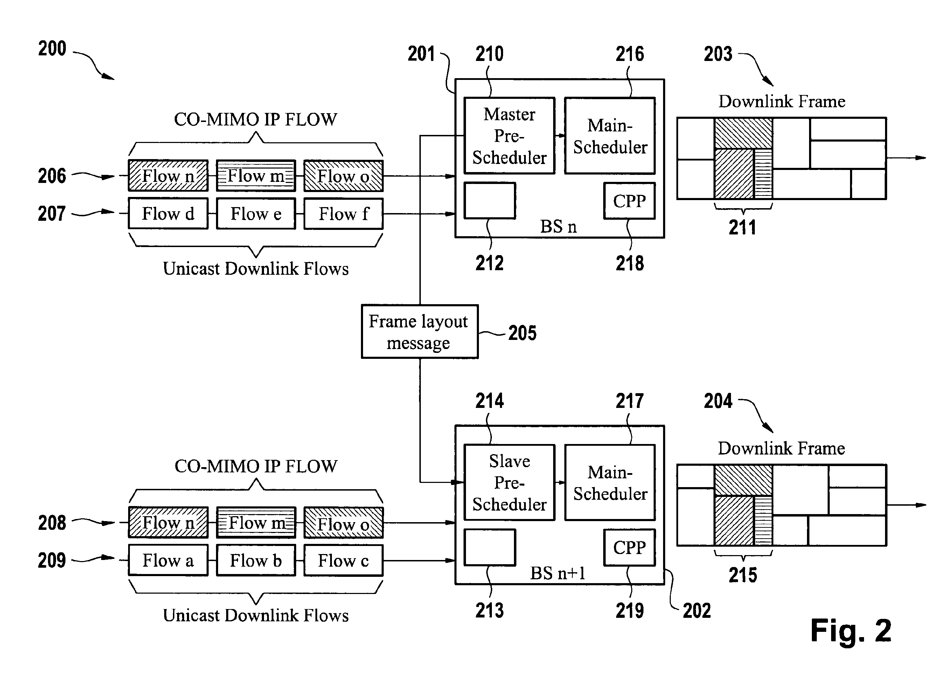

Fig. 2 shows a wireless communication system 200 including a first base station 201, a second base station 202, a first downlink frame generated by the first base station 203, a second downlink frame 204 generated by the second base station 202, a frame layout message 205, a first CO-MIMO IP flow 206, a unicast downlink flow 207 and the corresponding CO-MIMO IP flow 208 and a second unicast downlink flow 209 received by the second base station 202.

After the base stations have formed a collaborative MIMO domain and the network element has received the request of duplicating the IP flow corresponding to the collaborative MIMO communication, both base stations 201 and 202 start receiving the same collaborative MIMO IP flow 206 and 208, together with the general downlink flow 207 and 209. As the master base station corresponds to the first base station 201, a master pre-scheduler 210 within the first base station 201 receives the IP flow 206 and schedules a portion 211 of the downlink frame 203. This portion 211 corresponds to the collaborative MIMO communication and includes the data of the IP flow 206. In general, there is no one to one mapping between the IP packets and MAC PDU's inside the bursts.
An IP packets may be fragmented over several MAC PDU's, or one MAC PDU may contain several IP-packets or fragments.

When the scheduling has been completed, the base station 201 prepares a frame layout message 205 and sends the message with the means for transmitting 212 to the slave base station 202 and to any other slave base stations that are included in the collaborative MIMO. The means for receiving 213 within the second base station 202 receives the frame layout message that is then forwarded to the slave pre-scheduler 214. With the information included in the frame layout message 205, the slave pre-scheduler 214 is able to schedule the second portion 215 of the second downlink frame 204 in an identical way as the first portion 211 of the master base station 201.

The two portions 211 and 215 of both downlink frames 203 and 204 requires to be placed in the same sub-channels and symbols of the downlink frames, using the same coding scheme and containing the same payload. Otherwise, the two portions 211 and 215 are not identical. The frame layout message 205 contains the number of the downlink frames that the master base station is scheduling the collaborative MIMO IP flow; the position, size and coding scheme used on the portion or the burst corresponding to the collaborative MIMO inside the downlink frame; and the information of every MAC PDU inside the burst or portion 211.

This information of every MAC PDU includes the number of bytes, length, connection identifier, position and reference number of the corresponding access network packet. This information is sent in the frame layout message via the access network to the slave base stations within the collaborative MIMO domain, and with that message the slave pre-scheduler sets up the partial frame layout for the portion 215, which is identical to the layout generated by the master pre-scheduler. This portion of the downlink frame or partial layout of the downlink frame 204 is sent to the main scheduler, which completes the downlink frame by filling up with the burst of the non-collaborative MIMO flows. This is done by all the base stations within the domain and the downlink frames from all the base stations is then ready to be processed by their physical layer entities and sent simultaneously or within a small timeframe via the antennas of the base stations to the wireless terminal.

If one of the packets is not received by one of the base stations of the domain or it is corrupted, the base stations may contain error reduction capabilities. If the base station acting as the slave base station does not receive an IP packet, this loss can be detected by inspection of the incrementing reference number of the received packets, that may be included in the GRE-header which is part of the protocol stack, which contains an incrementing reference number that can be used for this purpose. In this case, the slave pre-scheduler includes padding information in the burst corresponding to the collaborative MIMO domain. On the other hand, if the master base station does not receive an IP packet of the collaborative MIMO IP flow, the main scheduler 216 schedules the whole downlink frame 203, and the master base station 201 does not send any frame layout message 205. The slave base station waits during a timeframe for the frame layout message 205, and after that timeframe, schedules the downlink frame without any specific information regarding the portion 215 of the collaborative MIMO communication.

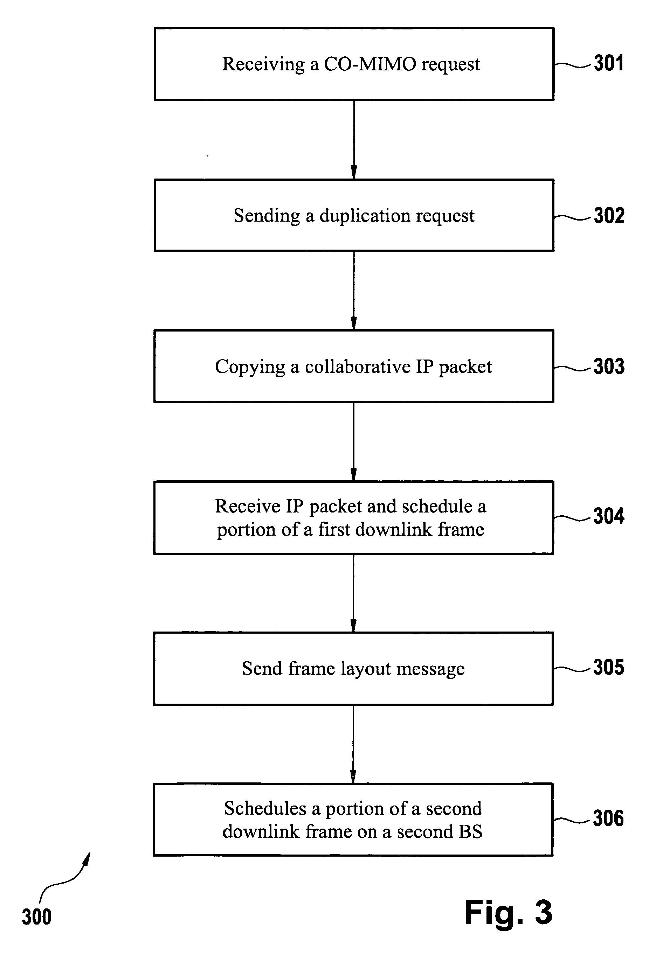

Fig. 3 shows a flowchart of a method of data synchronization in a wireless communication system. The method 300 comprises a first step 301 that receives a collaborative MIMO connection request from the wireless terminal by the first or the second base station. A second step 302 sends a duplication signal request to the network element from a first base station, where the duplication signal indicates the duplication of the IP flow for the wireless terminal. The third step 303 copies the first IP packet of the collaborative MIMO IP flow and sends it to all the base stations within the collaborative MIMO domain.

The fourth step 304 of the method of data synchronization receives the first IP packet by the master base station and schedules a first portion of a first downlink frame. The fifth step 305 sends a frame layout message from the master base station to all the slave base stations of the collaborative MIMO, where the message contains a description of the first portion of the first downlink frame. The sixth step 306 schedules another portion of a second downlink frame within the base station using the description included in the frame layout message, so that both portions of the downlink frames generated by all base stations within the collaborative MIMO are identical.

### List of Reference Numerals

| | |
|---|---|
| 100 | wireless communication system |
| 101 | core network |
| 102 | Network element |
| 103 | first base station |
| 104 | second base station |
| 105 | terminal |
| 106 | collaborative MIMO domain |
| 107 | I P packet |
| 108 | first duplicated IP packet |
| 109 | second duplicated IP packet |
| 200 | wireless communication system |
| 201 | master base station |
| 202 | slave base station |
| 203 | first downlink frame |
| 204 | second downlink frame |
| 205 | frame layout message |
| 206 | collaborative MIMO IP flow |
| 207 | unicast flow |
| 208 | CO-MIMO IP flow |
| 209 | unicast flow |
| 210 | master pre-scheduler |
| 211 | first portion |
| 212 | means for transmitting |
| 213 | means for receiving |
| 214 | slave pre-scheduler |
| 215 | second portion |
| 216 | main scheduler |
| 217 | second main scheduler |
| 218 | first computer program product |
| 219 | second CPP |
| 300 | flowchart |
| 301 | first step |
| 302 | second step |
| 303 | third step |
| 304 | fourth step |
| 305 | fifth step |
| 306 | sixth step |

## Claims

1. A method for data synchronisation of collaborative MIMO for an OFDMA system, said OFDMA system comprising a network element (102) coupled to at least a first (103) and a second base station (104), said first (103) and second base station (104) coupled to at least a wireless terminal (105), the method comprising the steps of:
- receiving (301) a collaborative MIMO connection request from said wireless terminal (105)by said first (103) or second base station (104);
- sending (302) a duplication signal to said network element (102) from said first base station (103), said duplication signal indicating a duplication of a collaborative IP flow (206) for said wireless terminal (105);
- receiving a first IP packet of said collaborative IP flow (206) by said network element (102);
- copying (303) said first IP packet and sending it to at least said first (103) and second base station (104);
- receiving (304) said first IP packet by said first base station (103) and scheduling (304) a first portion (211) of a first downlink frame (203);
- sending (305) a frame layout message (205) from said first base station (201) to said second base station (202), said frame layout message (205) containing a description about said first portion (211) of said first downlink frame (203);
- scheduling (306) a second portion (215) of a second downlink frame (204) by said second base station (202) with said description of said first portion (211) of said first downlink frame (203),
wherein said first (211) and second portion (215) of said first (203) and second downlink frames (204) are identical.

2. The method as in claim 1, wherein said frame layout message (205) further comprises: a first downlink frame number; position, size and coding scheme of every burst of said first downlink frame; and information of a MAC PDU of each burst.

3. The method as in claims 1 and 2 further comprising:
- configuring said first base station (201) as a master base station and at least said second base station (202) as an slave base station, wherein said master base station is in charge of creating and sending said frame layout message to said slave base stations.

4. The method as in claims 1 and 3, wherein said master and slave base station identifies a packet loss by reading an incrementing reference number of a GRE header of a previous IP packet of said first IP packet.

5. The method as in claims 1 and 4, wherein if said master base station does not receive said first IP packet, said master base station does not sent said frame layout message to said slave base stations and said slave base station schedules said second portion of said second frame without said description of said first portion of said first downlink frame.

6. The method as in claims 1 and 4, wherein if said slave base station does not receive said first IP packet, said second portion of said second downlink frame contains only padding information.

7. A base station for an OFDMA system, the base station comprising:
- means for (212) receiving a collaborative MIMO connection request from a wireless terminal (105), said wireless terminal being coupled to a base station and to at least another base station, said base station and at least said another base station of said OFDMA system;
- means for (212) sending a duplication signal to a network element, said duplication signal indicating a duplication of a collaborative IP flow for said wireless terminal, said network element coupled to said base station and to at least said another base station;
- means for (212) receiving a first IP packet of said collaborative IP flow, said first IP packet being copied by said network element;
- means for (210) scheduling a first portion of a first downlink frame;
- means for (212) sending a frame layout message to said second base station, said frame layout message containing a description about said first portion of said first downlink frame, said second base station being adapted for scheduling a second portion of a second downlink frame by said second base station with said description of said first portion of said first downlink frame, wherein said first and second portion of said first and second downlink frames are identical.

8. The base station as in claim 7, wherein the base station further comprises means for scheduling (216) IP packets from non collaborative IP flows on other portions of said first downlink frame.

9. An OFDMA system for data synchronisation of collaborative MIMO comprising a master base station in accordance with claim 7 and a slave base station,
wherein said master base station is in charge of creating and sending a frame layout message to said slave base stations, wherein said master and slave base station are coupled to a network element.

10. A computer program product (218) stored on a computer usable medium, comprising computer readable program means for causing a computer to perform a method according to any of the preceding claims 1 to 6 when said program is run on said computer.

## Amended claims

### Amended claims in accordance with Rule 137(2) EPC.

**1.** A method for data synchronisation of collaborative MIMO for an OFDMA system, said OFDMA system comprising a network element (102) coupled to at least a first (103) and a second base station (104), said first (103) and second base station (104) coupled to at least a wireless terminal (105), the method comprising the steps of:
- receiving (301) a collaborative MIMO connection request from said wireless terminal (105) by said first (103) or second base station (104);
- sending (302) a duplication request to said network element (102) from said first base station (103), said duplication request indicating a duplication of a collaborative IP flow (206) for said wireless terminal (105);
- receiving a first IP packet of said collaborative IP flow (206) from the core network (101) by said network element (102);
- copying (303) said first IP packet and sending it to at least said first (103) and second base station (104);
- receiving (304) said first IP packet by said first base station (103) and scheduling (304) a first portion (211) of a first downlink frame (203);
- sending (305) a frame layout message (205) from said first base station (201) to said second base station (202), said frame layout message (205) containing a description about said first portion (211) of said first downlink frame (203);
- scheduling (306) a second portion (215) of a second downlink frame (204) by said second base station (202) with said description of said first portion (211) of said first downlink frame (203),
wherein said first (211) and second portion (215) of said first (203) and second downlink frames (204) are identical.

**2.** The method as in claim 1, wherein said frame layout message (205) further comprises: a first downlink frame number; position, size and coding scheme of every burst of said first downlink frame; and information of a MAC PDU of each burst.

**3.** The method as in claims 1 and 2 further comprising:
- configuring said first base station (201) as a master base station and at least said second base station (202) as a slave base station, wherein said master base station is in charge of creating and sending said frame layout message to said slave base stations.

**4.** The method as in claim 3, wherein said master and slave base station identifies a packet loss by reading an incrementing reference number of a GRE header of a previous IP packet of said first IP packet.

**5.** The method as in claim 3 or 4, wherein if said master base station does not receive said first IP packet, said master base station does not sent said frame layout message to said slave base stations and said slave base station schedules said second portion of said second frame without said description of said first portion of said first downlink frame.

**6.** The method as in claim 3 or 4, wherein if said slave base station does not receive said first IP packet, said second portion of said second downlink frame contains only padding information.

**7.** A base station for an OFDMA system, the base station comprising:
- means for (212) receiving a collaborative MIMO connection request from a wireless terminal (105), said wireless terminal being coupled to said base station and to at least another base station of said OFDMA system;
- means for (212) sending a duplication request to a network element, said duplication request indicating a duplication of a collaborative IP flow for said wireless terminal, said network element coupled to said base station and to at least said another base station;
- means for (212) receiving a first IP packet of said collaborative IP flow, said first IP packet being copied by said network element;
- means for (210) scheduling a first portion of a first downlink frame;
- means for (212) sending a frame layout message to said another base station, said frame layout message containing a description about said first portion of said first downlink frame, said another base station being adapted for scheduling a second portion of a second downlink frame by said another base station with said description of said first portion of said first downlink frame, wherein said first and second portion of said first and second downlink frames are identical.

**8.** The base station as in claim 7, wherein the base station further comprises means for scheduling (216) IP packets from non collaborative IP flows on other portions of said first downlink frame.

**9.** An OFDMA system for data synchronisation of collaborative MIMO comprising a master base station in accordance with claim 7 and a slave base station,
wherein said master base station is in charge of creating and sending a frame layout message to said slave base stations, wherein said master and slave base station are coupled to a network element.

**10.** A computer program product (218) stored on a computer usable medium, comprising computer readable program means for causing a computer to perform a method according to any of the preceding claims 1 to 6 when said program is run on said computer.
